# EUROPÄISCHE PATENTANMELDUNG

(11) **EP 3 666 342 A1**
(43) Veröffentlichungstag der Anmeldung: **17.06.2020**
(21) Anmeldenummer: 18211203.7
(22) Anmeldetag: 10.12.2018
(51) Int. Cl.: A62C 2/06, A62C 2/24, A62C 3/16, F16L 5/04, F16L 55/10

(54) **BRANDSCHUTZELEMENT**

(71) Anmelder: Hilti Aktiengesellschaft, 9494 Schaan (LI)
(72) Erfinder: Ahlers, Andreas, 87679 Westendorf (DE); Simon, Sebastian, 86807 Buchloe Lindenberg (DE)
(74) Vertreter: Hilti Aktiengesellschaft Corporate Intellectual Property

(57) **Zusammenfassung**

Ein Brandschutzelement zum Abdichten eines eine Öffnung (22) in einer Wand (12) oder Decke durchsetzenden brennbaren Körpers im Brandfall umfasst eine Brandschutzeinlage (16) und ein wärmeaktivierbares Antriebsmittel (20) für die Brandschutzeinlage (16), wobei sich die Brandschutzeinlage (16) in einer Ausgangsstellung innerhalb der Wand (12) oder Decke befindet und im Brandfall in eine Einsatzstellung bewegt wird, in welcher sich die Brandschutzeinlage (16) zumindest teilweise außerhalb der Wand (12) oder Decke befindet.

## Beschreibung

Die Erfindung betrifft ein Brandschutzelement zum Abdichten eines eine Öffnung in einer Wand oder Decke durchsetzenden brennbaren Körpers im Brandfall, sowie eine Brandschutzvorrichtung.

Um eine Ausbreitung von Feuer oder Rauch in Gebäuden zu verhindern, müssen Öffnungen in Decken oder Wänden, in denen beispielsweise Rohre oder Kabel geführt werden, im Brandfall verschlossen werden können. Zu diesem Zweck werden verschiedene Brandschutzlösungen eingesetzt, zum Beispiel Bandagen oder Bänder, die in die Wand oder als Manschetten vor der Wand montiert werden.

Dabei werden verschiedene Brandschutzmittel, beispielsweise in Form von Einlagen verwendet, die beispielsweise an einem Gehäuse befestigt werden. Insbesondere intumeszierende Materialien eignen sich für die Einlagen. Im Brandfall schäumt das intumeszierende Material durch Wärmeeinwirkung auf und verschließt die Öffnung, wodurch die Ausbreitung von Rauch oder Feuer verhindert oder zumindest verzögert wird.

Brandschutzmanschetten haben den Vorteil, dass sie außerhalb der Wand montiert und so im Brandfall schneller erhitzt werden können, da das Brandschutzmittel nicht passiv durch die umgebende Wand gekühlt wird.

Da die Manschetten jedoch an der Außenseite der Wand angebracht werden müssen, kann der Brandschutz erst installiert werden, nachdem die Wand oder Decke beispielsweise aus Beton bereits gegossen wurde und Rohre oder Kabelführungen verlegt worden sind. Dadurch sind zusätzliche Arbeitsschritte notwendig. Gleichzeitig besteht noch kein Brandschutz, bis die Manschetten montiert sind.

Aus der WO 2016 202 681 A1 ist ein Brandschutzband bekannt, das ein Intumeszenzmaterial auf einem Träger umfasst. Der Träger ist aus einem Material gebildet, welches sich selbstständig zu einer Spirale aufrollt, wenn keine gegenläufige Kraft auf das Material einwirkt. Das Brandschutzband wird beispielsweise um ein Rohr in einer Wand geklemmt und so unter Vorspannung gehalten. Im Brandfall schmilzt das Rohr weg, wodurch sich das Brandschutzband entrollt und auf diese Weise das Intumeszenzmaterial ins Innere der Öffnung innerhalb der Wand einträgt.

Die WO 2004 015 319 A1 zeigt eine Manschette, in der in einem ringförmigen Gehäuse eine gespannte Schraubenfeder und ein hitzebeständiges Gewebe vorgesehen ist. Im Brandfall drückt die Schraubenfeder das schmelzende Rohr zusammen und zieht dabei das hitzebeständige Gewebe in das Innere der Rohröffnung mit. Zusätzlich ist ein Intumeszenzmaterial vorgesehen, welches zwischen einer Wand und der Schraubenfeder um das Rohr herum angeordnet ist und für einen weiteren Verschluss der Öffnung sorgt.

In der DE 10 2004 014 347 B4 werden lamellenförmige Sperrelemente aus Bimetall eingesetzt, welche aufgerollt um das Rohr angeordnet sind und sich im Brandfall entrollen, um auf diese Weise die Öffnung irisartig zu verschließen.

Aus der US 2017 009 470 A1 sind Rohrdurchführungen bekannt, die flexibel an die Dicke einer Wand oder Decke angepasst und bereits während des Gießens der Wand oder Decke montiert werden können. Jedoch weisen diese Rohrdurchführungen keine Brandschutzfunktion auf.

Aufgabe der Erfindung ist es, eine Brandschutzlösung bereitzustellen, die bereits während der Herstellung einer Wand oder Decke angebracht und im Brandfall frühzeitig aktiviert werden kann.

Die Aufgabe wird erfindungsgemäß gelöst durch ein Brandschutzelement zum Abdichten eines eine Öffnung in einer Wand oder Decke durchsetzenden brennbaren Körpers im Brandfall, das eine Brandschutzeinlage und ein wärmeaktivierbares Antriebsmittel für die Brandschutzeinlage umfasst, wobei sich die Brandschutzeinlage in einer Ausgangsstellung innerhalb der Wand oder Decke befindet und im Brandfall durch das wärmeaktivierbare Antriebsmittel in eine Einsatzstellung bewegt wird, in welcher sich die Brandschutzeinlage zumindest teilweise außerhalb der Wand oder Decke befindet.

Auf diese Weise wird erreicht, dass das Brandschutzelement zunächst innerhalb der Wand oder Decke angebracht werden kann, beispielsweise als Cast-in während des Gießens der Wand oder Decke mit Beton, und gleichzeitig die Brandschutzeinlage des Brandschutzelements im Brandfall vor die Wand bewegt werden kann. Somit wird das Brandschutzmaterial der Brandschutzeinlage nicht durch eine umgebende Wand oder Decke verdeckt und/oder gekühlt, wodurch eine frühzeitige Aktivierung und damit ein zuverlässiger Verschluss der Öffnung im Brandfall ermöglicht wird.

Gleichzeitig muss das Brandschutzelement nicht von vornherein als Manschette vor der Wand montiert werden, wodurch das Brandschutzelement auch in begrenzten Platzverhältnissen angebracht werden kann und nicht von außen sichtbar ist.

Auch eignen sich verschiedene Brandschutzmaterialien für die Brandschutzeinlage, sodass das Brandschutzelement für eine Vielzahl von Anwendungsfällen genutzt werden kann, beispielsweise auch für Leerrohre oder Kabeldurchführungen.

Das wärmeaktivierbare Antriebsmittel kann eine Feder, ein Bimetall und/oder ein expandierbares Gas als Antriebselement umfassen. Federn stellen ein besonders kostengünstiges Antriebselement dar, während ein Bimetall und ein expandierbares Gas für eine konstante Krafteinwirkung eingesetzt werden können.

In einer bevorzugten Ausführungsform umfasst das wärmeaktivierbare Antriebsmittel ein Gehäuse sowie ein mit dem Gehäuse verbundenes Halteelement und mindestens eine im Gehäuse angeordnete Feder, wobei das Halteelement in der Ausgangsstellung die Feder unter Vorspannung hält und bei Wärmeeinwirkung die Feder freigibt. Durch die vorgespannte Feder wird im Brandfall, sobald das Halteelement nachgibt, schlagartig eine große Kraft auf die Brandschutzeinlage aufgebracht. Dies ermöglicht es zuverlässig, die Brandschutzeinlage innerhalb kürzester Zeit aus der Wand oder Decke heraus in die Einsatzstellung zu bewegen.

Das Gehäuse kann auch aus mehreren Gehäuseteilen bestehen, wobei ein erstes Gehäuseteil mit dem Halteelement in Verbindung steht und ein zweites Gehäuseteil, beispielsweise als Hüllrohr, um das Brandschutzelement herum angeordnet ist. Eine solche Anordnung verhindert ein Eindringen von Beton in das Brandschutzelement, wenn dieses bereits vor dem Gießen der Wand oder Decke, beispielsweise auf einer Schalung, angebracht wird. Zusätzlich verhindert eine solche Ausführungsform das Eindringen von Feuchtigkeit oder Schmutz nach dem Fertigstellen der Wand oder Decke.

Das Halteelement kann zumindest teilweise aus einem niedrigschmelzenden Material bestehen, bevorzugt aus einem niedrigschmelzenden Kunststoff oder aus Weichlot, wie beispielsweise Lötzinn. Auf diese Weise kann sichergestellt werden, dass die Brandschutzeinlage bei einer durch den Erweichungspunkt des Halteelements vorbestimmten Temperatur frühzeitig in die Einsatzstellung übergeht und so eine frühe Aktivierung gewährleistet ist.

Bevorzugt umfasst das wärmeaktivierbare Antriebsmittel einen Träger, auf dem die Brandschutzeinlage gelagert ist. Über den Träger kann eine stabile Verbindung zwischen der Brandschutzeinlage und dem wärmeaktivierbaren Antriebsmittel gewährleistet werden. Zugleich muss das Antriebselement nicht direkt auf die Brandschutzeinlage einwirken, sondern kann die Brandschutzeinlage auch durch eine Bewegung des Trägers verschieben. Dadurch kann die Brandschutzeinlage dünner gefertigt werden, da sie selbst keine Kontaktfläche zum Antriebselement aufweisen muss. Zugleich kann der Träger, beispielsweise durch Aussparungen, so ausgestaltet sein, das eine gute Kraftübertragung und eine stabile Verbindung zum Antriebselement gewährleistet ist.

Die Brandschutzeinlage kann ein Brandschutzmaterial aufweisen, ausgewählt aus der Gruppe bestehend aus intumeszierenden Materialien, insbesondere Blähgraphit, Brandschutzbeschichtungen, Brandschutzschäumen, insbesondere auf Polyurethanbasis, und Ablationsbeschichtungen, insbesondere Aluminiumtrihydrat, und aus Kombinationen davon. Entsprechend kann das für eine bestimmte Anforderung am besten geeignete Brandschutzmaterial ausgewählt werden. Das Brandschutzelement kann daher für eine Vielzahl von Anwendungsfällen eingesetzt werden. Es ist auch denkbar, dass das Brandschutzelement erst vor Ort zusammengesetzt und mit der gewünschten Brandschutzeinlage versehen wird. Somit müssen zwar noch verschiedene Brandschutzeinlagen, aber lediglich ein Mechanismus vorgehalten werden.

Um die Ausbreitung von Rauch im Brandfall zu verhindern, kann das Brandschutzelement zusätzlich eine Rauchschutzdichtung, bevorzugt aus Gummi oder einem Elastomer, umfassen. Die Rauchschutzdichtung wird dabei vorteilhafterweise an einem der Brandschutzeinlage entgegengesetzten Ende des Brandschutzelements angebracht, beispielsweise in einer Aussparung des Gehäuses, um eine zweite Barriere gegen Rauch hinter dem eigentlichen Brandschutzmaterial zu bilden.

In einer bevorzugten Ausführungsform ist die Brandschutzeinlage und das wärmeaktivierbare Antriebsmittel jeweils aus mehreren Teilen aufgebaut, bevorzugt aus zwei bis vier Teilen, sodass die Teile der Brandschutzeinlage unabhängig voneinander von der Ausgangsstellung in die Einsatzstellung bewegt werden können. Auf diese Weise wird verhindert, dass die Brandschutzeinlage beispielsweise durch Unebenheiten oder Reste des brennbaren Körpers blockiert wird und im Brandfall nicht aus der Wand oder Decke ausfährt. Wenn die Brandschutzeinlage aus mehreren Teilen besteht, wird gewährleistet, dass zumindest eines der Teile im Brandfall vor der Wand liegt und so frühzeitig zumindest für einen Teilverschluss der Öffnung sorgt. Die in der Wand blockierten Teile können anschließend, später ausgelöst, für einen vollständigen Verschluss innerhalb der Wand oder Decke sorgen.

Auch können die einzelnen Teile in dieser Ausführungsform entsprechend von mehreren niedrigschmelzenden Halteelementen in ihrer Ausgangsstellung gehalten werden. Dadurch wird es möglich, dass einige der Halteelemente früher schmelzen als andere und zumindest ein Teil der Brandschutzeinlage bereits vor die Wand oder Decke bewegt und so früher aktiviert wird.

Besonders vorteilhaft ist es, wenn das Brandschutzelement in der Ausgangsstellung der Brandschutzeinlage bündig mit der Wand oder Decke abschließt. Auf diese Weise kann das Brandschutzelement direkt, beispielsweise als Cast-In auf einer Schalung vor dem Gießen der Wand oder Decke, montiert werden. Gleichzeitig ist dadurch bereits ab dem Zeitpunkt, an dem die Wand oder Decke gegossen wird, einsatzfähiger Brandschutz installiert. Auch benötigt das Brandschutzelement, außer im Brandfall, keinen Platz vor der Wand, wodurch eine Anwendung auch in engen Platzverhältnissen ermöglicht wird.

Des Weiteren wird die Aufgabe erfindungsgemäß gelöst durch eine Brandschutzvorrichtung, umfassend zwei Brandschutzelemente der zuvor beschriebenen Art, dadurch gekennzeichnet, dass die beiden Brandschutzelemente symmetrisch zur Mitte der Öffnung der Wand oder Decke angeordnet sind. Eine solche Brandschutzvorrichtung hat den Vorteil, dass sie aus zwei identischen Brandschutzelementen zusammengesetzt werden kann, sodass für verschiedene Anwendungsfälle nur noch ein Brandschutzelement vorgehalten werden muss. Gleichzeitig ist gewährleistet, dass die Brandschutzeinlagen der beiden Brandschutzelemente jeweils auf einer Seite der Wand oder Decke vor diese bewegt werden können.

Weitere Vorteile und Eigenschaften der Erfindung ergeben sich aus der nachfolgenden Beschreibung bevorzugter Ausführungsformen und den Zeichnungen, auf die Bezug genommen wird. Diese sollen nicht in einem einschränkenden Sinn verstanden werden. In den Zeichnungen zeigen:
- Figur 1 eine schematische Darstellung eines erfindungsgemäßen Brandschutzelements in der Ausgangsstellung der Brandschutzeinlage,
- Figur 2 das Brandschutzelement aus Figur 1 in der Einsatzstellung der Brandschutzeinlage,
- Figur 3 eine Explosionsansicht einer ersten Ausführungsform des Brandschutzelements,
- Figur 4 eine perspektivische Darstellung eines Brandschutzelements nach Figur 3,
- Figur 5 eine Explosionsansicht einer zweiten Ausführungsform des Brandschutzelements, und
- Figur 6 eine perspektivische Darstellung eines Brandschutzelements nach Figur 5.

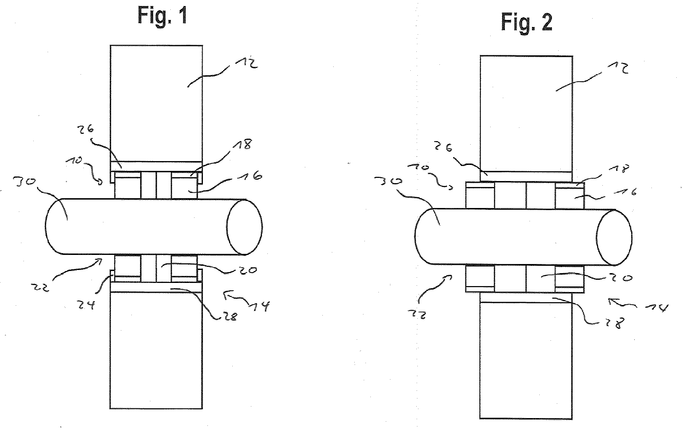

In Figur 1 ist eine schematische Darstellung eines erfindungsgemäßen Brandschutzelements 10 innerhalb einer Wand 12 gezeigt. In der dargestellten Ausführungsform ist an beiden Seiten der Wand 12 jeweils ein Brandschutzelement 10 angebracht, sodass diese eine Brandschutzvorrichtung 14 bilden.

Das Brandschutzelement 10 umfasst eine Brandschutzeinlage 16 sowie einen Träger 18, mit dem die Brandschutzeinlage 16 verbunden ist, und ein wärmeaktivierbares Antriebsmittel 20 für die Brandschutzeinlage 16. Die Brandschutzeinlage 16 und der Träger 18 sind in der dargestellten Ausführungsform näher an den aus der Wand 12 weisenden Enden der Öffnung 22 als das wärmeaktivierbare Antriebsmittel 20 angeordnet.

Die Brandschutzeinlage 16 wird von niedrigschmelzenden Halteelementen 24 innerhalb der Wand 12 gehalten. Ein Gehäuse 26 umgibt die Brandschutzeinlage 16 und das wärmeaktivierbare Antriebsmittel 20. In der dargestellten Ausführungsform ist das Gehäuse 26 als ein durchgängiges Hüllrohr 28 gezeigt, das beide Brandschutzelemente 10 umgibt. Grundsätzlich könnte jedoch auch jeweils ein Gehäuse 26 pro Brandschutzelement 10 vorgesehen sein, die bündig aneinander anliegen. Innerhalb des Brandschutzelements 10 ist ein Rohr 30 durch die Öffnung 22 in der Wand 12 geführt.

In Figur 2 ist die gleiche Anordnung wie in Figur 1, jedoch in der Einsatzstellung des Brandschutzelements 10, gezeigt. Die Halteelemente 24 sind weggeschmolzen, wodurch das wärmeaktivierbare Antriebsmittel 20 die Brandschutzeinlage 16 mit dem Träger 18 teilweise vor die Wand 12 bewegt hat.

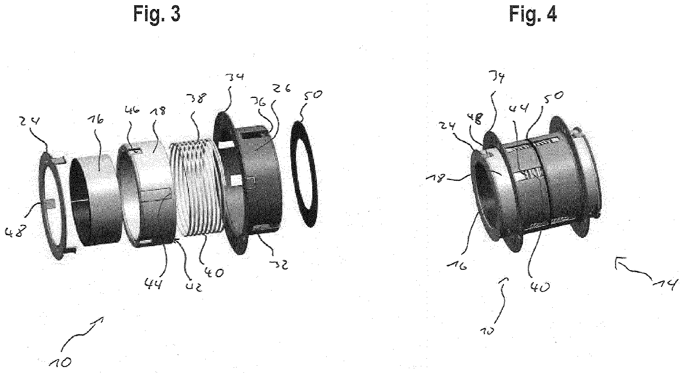

In Figur 3 ist eine Explosionsansicht einer Ausführungsform eines erfindungsgemäßen Brandschutzelements 10 gezeigt. Ein an beiden Enden offenes zylinderförmiges Gehäuse 26 weist an seiner Mantelfläche mehrere Aussparungen 32, an einem axialen Ende einen umlaufenden Kragen 34 sowie am anderen axialen Ende eine umlaufende Nut 36 auf. Der Kragen 34 ragt radial nach außen über den inneren Durchmesser des Gehäuses 26 hinaus, sodass das Gehäuse 26 mittels des Kragens 34 beispielsweise auf der Außenseite der Wand 12 oder auf einer Schalung zum Gießen der Wand 12 befestigt werden kann. Die umlaufende Nut 36 verläuft innerhalb einer radial nach innen ragenden Schulter des Gehäuses 26.

Als Antriebselement 38 des wärmeaktivierbaren Antriebsmittels 20 dient eine Feder 40, die mit ihrem einen axialen Ende innerhalb der Nut 36 des Gehäuses 26 angeordnet ist. Am der Nut 36 entgegengesetzten axialen Ende der Feder 40 ist diese auf dem Träger 18 gelagert. Der Träger 18 kann auf einer Seite eine ringförmige Nut 42 aufweisen, in der die Feder 40 aufgenommen wird.

Der Träger 18 weist an seiner Außenseite zumindest einen Vorsprung 44 auf, welcher in die Aussparungen 32 des Gehäuses 26 eingreifen kann, und somit verhindert, dass der Träger 18 von der Feder 40 komplett, über die Einsatzstellung der Brandschutzeinlage 16 hinaus, aus dem Gehäuse 26 herausgedrückt werden kann.

Auf dem der Feder 40 entgegengesetzten Ende des Trägers 18 weist dieser drei über den Umfang des Trägers 18 verteilte Halteaussparungen 46 auf. Eine einzelne Halteaussparung 46 würde ebenfalls ausreichen, durch mehrere Halteaussparungen 46 wird jedoch eine stabilere Anordnung des Brandschutzelements 10 erreicht.

Eine ringförmige Brandschutzeinlage 16 kann innerhalb des Trägers 18 eingesetzt werden. Die Brandschutzeinlage 16 kann aus verschiedenen Brandschutzmaterialien bestehen, besonders bevorzugt aus einen intumeszierenden Material, beispielsweise Blähgraphit, das im Brandfall sein Volumen vergrößert und die Öffnung 22 dadurch verschließt.

Auf den Träger 18 wird ein ringförmiges Halteelement 24 mit mehreren axial abstehenden Zungen 48 aufgesetzt. Die Zungen 48 werden dabei innerhalb der Halteaussparungen 46 des Trägers 18 aufgenommen und weisen radial nach außenstehende Nasen auf. Die Nasen greifen jeweils in eine Aussparung 32 des Gehäuses 26 ein und halten damit den Träger 18 im Gehäuse 26, während die vom Träger 18 zusammengedrückte Feder 40 unter Vorspannung steht. Der Vorsprung 44 des Trägers 18 kann in derselben Aussparung 32 wie die Nasen der Zungen 48 oder, wie in Figur 4 zu sehen, in einer separaten Aussparung 32 geführt sein. Das ringförmige Halteelement 24 kann auf dem Träger 18 fixiert werden, beispielsweise durch Verkleben.

Zumindest die Zungen 48 bestehen aus einem niedrig schmelzenden Material, beispielsweise einer niedrigschmelzenden Legierung wie einem Weichlot oder einem Kunststoff, und schmelzen daher im Brandfall durch den Wärmeeintrag frühzeitig weg. Grundsätzlich kann jedoch auch das gesamte Halteelement 24 aus einem niedrig schmelzenden Material gefertigt sein.

Zusätzlich umfasst das Brandschutzelement 10 eine Rauchschutzdichtung 50, welche auf der dem Halteelement 24 entgegengesetzten Seite des Gehäuses 26 angeordnet ist und im Brandfall die Ausbreitung von Rauch über die Seiten des Brandschutzelements 10 verhindert.

In Figur 4 ist eine perspektivische Ansicht einer Brandschutzvorrichtung 14, umfassend zwei Brandschutzelemente 10 und 10' gemäß Figur 3, gezeigt. Die beiden Brandschutzelemente 10 und 10' sind im Wesentlichen symmetrisch zur Mitte der Brandschutzvorrichtung 14 angeordnet, wobei beide Gehäuse 26 und 26' zueinander verdreht angebracht sind. Zwischen den beiden Brandschutzelementen 10 und 10' ist die Rauchschutzdichtung 50 angebracht, sodass nur eine Rauchschutzdichtung 50 für beide Brandschutzelemente 10 und 10' benötigt wird.

Der Vorsprung 44 des Trägers 18 ist innerhalb der Aussparung 32 des Gehäuses 26 geführt. Dadurch wird im Brandfall ein unkontrolliertes Ausfahren des Trägers 18 aus der Öffnung 22 verhindert, da die Vorsprünge 44 maximal bis zum Kragen 34 des Gehäuses 26 bewegt werden können.

Die Zungen 48 des Halteelements 24 liegen innerhalb der Halteaussparungen 46. Wird nun der Träger 18 zur Mitte der Brandschutzvorrichtung 14 bewegt, wird die Feder 40 zusammengedrückt. Dabei rasten die Nasen der Zungen 48 in den Aussparungen 32 des Gehäuses 26 ein. Dadurch wird die Feder 40 vorgespannt und die Brandschutzeinlage 16 innerhalb des Brandschutzelements 10 in ihrer Ausgangsstellung gehalten.

Da die Zungen 48 aus einem niedrig schmelzenden Material, beispielsweise niedrig schmelzendem Kunststoff oder einem Weichlot, bestehen, schmelzen zumindest die Nasen der Zungen 48 im Brandfall weg. Dadurch entspannt sich die Feder 40 und drückt den Träger 18 aus dem Gehäuse 26 aus der Wand 12 heraus. Die Brandschutzeinlage 16 wird somit in ihre Einsatzstellung vor die Wand bewegt und kann anschließend durch die Wärmeeinwirkung aktiviert werden.

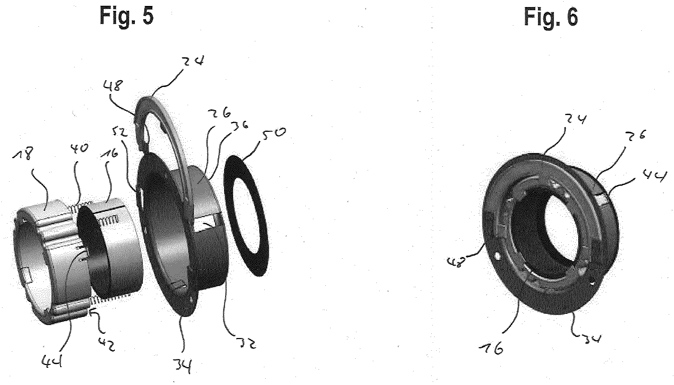

In den Figuren 5 und 6 ist eine alternative Ausführungsform des Brandschutzelements 10 gezeigt. In dieser werden vier Federn 40 als Antriebselement 38 eingesetzt, welche jeweils in ringförmige Nuten 42 des Trägers 18 eingreifen. An ihrem anderen Ende stützen sich die Federn 40 innerhalb der umlaufenden Nut 36 des Gehäuses 26 ab.

Das Gehäuse 26 weist in dieser Ausführungsform auf dem Kragen 34 mehrere Laschen 52 auf. Das Halteelement 24 ist als Bogen ausgeführt, dessen Enden in die Laschen 52 auf dem Kragen 34 des Gehäuses 26 eingreifen. Die Zungen 48 zeigen ausgehend vom Halteelement 24 radial nach innen und halten so den Träger 18 innerhalb des Gehäuses 26. Die Federn 40 werden durch den in das Gehäuse 26 eingeführten Träger 18 vorgespannt.

Im Brandfall schmelzen die Zungen 48 weg, wodurch der Träger 18 zusammen mit der vom Träger 18 aufgenommenen Brandschutzeinlage 16 durch die Federn 40 aus der Wand 12 gedrückt und die Brandschutzeinlage 16 in ihre Einsatzstellung bewegt wird. Da in dieser Ausführungsform in Form der Federn 40 mehrere, voneinander unabhängige Antriebselemente 38 vorliegen, können der Träger 18 und die Brandschutzeinlage 16 in mehrere Teile, beispielsweise Hälften, aufgeteilt sein, die unabhängig voneinander aus der Wand 12 herausgefahren werden können.

Die in den Figuren 3 bis 6 gezeigten Brandschutzelemente 10 können neben dem gezeigten Gehäuse 26 noch ein zusätzliches Hüllrohr 28 aufweisen, welches um das Gehäuses 26 herum angeordnet ist. Dadurch wird das Eindringen von Beton beim Gießen der Wand 12 sowie das Eindringen von Schmutz und Feuchtigkeit verhindert.

In einer alternativen Ausführungsform kann statt der Federn 40 ein Bimetall (nicht gezeigt) als Antriebselement 38 genutzt werden. Dabei kann das Bimetall beispielsweise als Band vorliegen, welches sich unter Wärmeeinwirkung verbiegt und dadurch eine Kraft auf den Träger 18 ausübt und diesen zusammen mit der Brandschutzeinlage 16 aus der Wand 12 bewegt.

In einer weiteren alternativen Ausführungsform kann innerhalb einer ringförmigen Kammer ein Gas eingeschlossen sein, welches unter Wärmeeinwirkung expandiert und dadurch den Träger 18 zusammen mit der Brandschutzeinlage 16 nach außen drückt.

## Patentansprüche

1. Brandschutzelement zum Abdichten eines eine Öffnung (22) in einer Wand (12) oder Decke durchsetzenden brennbaren Körpers im Brandfall, mit einer Brandschutzeinlage (16) und einem wärmeaktivierbaren Antriebsmittel (20) für die Brandschutzeinlage (16), wobei sich die Brandschutzeinlage (16) in einer Ausgangsstellung innerhalb der Wand (12) oder Decke befindet und im Brandfall durch das wärmeaktivierbare Antriebsmittel (20) in eine Einsatzstellung bewegt wird, in welcher sich die Brandschutzeinlage (16) zumindest teilweise außerhalb der Wand (12) oder Decke befindet.

2. Brandschutzelement nach Anspruch 1, **dadurch gekennzeichnet, dass** das wärmeaktivierbare Antriebsmittel (20) eine Feder (40), ein Bimetall und/oder ein expandierbares Gas als Antriebselement (38) umfasst.

3. Brandschutzelement nach einem der vorherigen Ansprüche, **dadurch gekennzeichnet, dass** das wärmeaktivierbare Antriebsmittel (20) ein Gehäuse (26) sowie ein mit dem Gehäuse (26) verbundenes Halteelement (24) und mindestens eine im Gehäuse (26) angeordnete Feder (40) umfasst, wobei das Halteelement (24) in der Ausgangsstellung die Feder (40) unter Vorspannung hält.

4. Brandschutzelement nach Anspruch 3, **dadurch gekennzeichnet, dass** das Halteelement (24) zumindest teilweise aus einem niedrig schmelzenden Material besteht, bevorzugt aus einem niedrig schmelzenden Kunststoff oder aus einem Weichlot.

5. Brandschutzelement nach einem der vorherigen Ansprüche, **dadurch gekennzeichnet, dass** das wärmeaktivierbare Antriebsmittel (20) einen Träger (18) umfasst, auf dem die Brandschutzeinlage (16) gelagert ist.

6. Brandschutzelement nach Anspruch 5, **dadurch gekennzeichnet, dass** das Haltelement (24) axial oder radial abstehende Zungen (48) aufweist, die den Träger (18) in der Ausgangstellung im Gehäuse (26) halten.

7. Brandschutzelement nach Anspruch 6, **dadurch gekennzeichnet, dass** das Gehäuse (26) eine oder mehrere Aussparungen (32) oder Laschen (52) aufweist, in welche die Zungen (48) eingreifen.

8. Brandschutzelement nach einem der Ansprüche 5 bis 7, **dadurch gekennzeichnet, dass** der Träger (18) mit mindestens einer im Gehäuse (26) angeordneten Feder (40) zusammenwirkt und die Feder (40) in der Ausgangsstellung unter Vorspannung hält.

9. Brandschutzelement nach einem der Ansprüche 5 bis 8, **dadurch gekennzeichnet, dass** am Träger (18) mindestens ein Vorsprung (44) vorgesehen ist, und dass das Gehäuse (26) wenigstens eine Aussparung (32) aufweist, in welcher der Vorsprung (44) geführt ist, wobei der Vorsprung (44) den Träger (18) im Gehäuse (26) hält, wenn die Brandschutzeinlage (16) in die Einsatzstellung bewegt wird.

10. Brandschutzelement nach einem der vorherigen Ansprüche, **dadurch gekennzeichnet, dass** die Brandschutzeinlage (16) ein Brandschutzmaterial aufweist, ausgewählt aus der Gruppe bestehend aus intumeszierenden Materialien, insbesondere Blähgraphit, Brandschutzbeschichtungen, Brandschutzschäumen, insbesondere auf Basis von Polyurethan-Schaum, und Ablationsbeschichtungen.

11. Brandschutzelement nach einem der vorherigen Ansprüche, **dadurch gekennzeichnet, dass** das Brandschutzelement (10) zusätzlich eine Rauchschutzdichtung (50), bevorzugt aus Gummi, umfasst.

12. Brandschutzelement nach einem der vorherigen Ansprüche, **dadurch gekennzeichnet, dass** die Brandschutzeinlage (16) und das wärmeaktivierbare Antriebsmittel (20) jeweils aus mehreren Teilen aufgebaut sind, bevorzugt aus zwei bis vier Teilen, sodass die Teile der Brandschutzeinlage (16) unabhängig voneinander von der Ausgangsstellung in die Einsatzstellung bewegt werden können.

13. Brandschutzelement nach einem der vorherigen Ansprüche, **dadurch gekennzeichnet, dass** das Brandschutzelement (10) in der Ausgangsstellung der Brandschutzeinlage (16) bündig mit der Wand (12) oder Decke abschließt.

14. Brandschutzvorrichtung, umfassend zwei Brandschutzelemente (10, 10') nach einem der vorherigen Ansprüche, **dadurch gekennzeichnet, dass** die beiden Brandschutzelemente (10, 10') symmetrisch zur Mitte der Öffnung (22) der Wand (12) oder Decke angeordnet sind.
